# EUROPEAN PATENT SPECIFICATION

(11) **EP 2 579 515 B1**
(45) Date of publication and mention of the grant of the patent: **02.03.2016**
(21) Application number: 10852001.6
(22) Date of filing: 19.08.2010
(51) Int. Cl.: H04L 29/06, H04W 4/12, H04W 4/14

(54) **METHOD, TERMINAL AND SYSTEM FOR IMPLEMENTING SHORT MESSAGE INTERACTION BY USING RADIO DATA SYSTEM**
VERFAHREN, ENDGERÄT UND SYSTEM ZUR IMPLEMENTIERUNG VON KURZNACHRICHTENINTERAKTION MIT EINEM FUNKDATENSYSTEM
PROCÉDÉ, TERMINAL ET SYSTÈME POUR METTRE EN UVRE UNE INTERACTION PAR MESSAGE COURT PAR UTILISATION D'UN SYSTÈME DE RADIOCOMMUNICATION DE DONNÉES

(30) Priority: 24.05.2010 CN 201010182536
(43) Date of publication of application: 10.04.2013
(73) Proprietor: ZTE Corporation, Shenzhen, Guangdong 518057 (CN)
(72) Inventor: Li, Chao, Shenzhen Guangdong 518057 (CN)
(74) Representative: Modiano, Micaela Nadia
(86) International application number: PCT/CN2010/076157
(87) International publication number: WO 2011/147130

(56) References cited:
- CN-C- 1 188 994
- US-A1- 2004 203 406
- US-A1- 2009 239 557
- US-B1- 6 625 464
- US-B1- 6 862 445

## Description

### Field of the Invention

The disclosure relates to the radio communication field, and in particular to a method, a terminal and a system for implementing short message interaction by using a Radio Data System (RDS).

### Background of the Invention

At present, a Frequency Modulation (FM) function for receiving and sending information is one of the necessary functions of a terminal such as a mobile phone. While using the RDS to perform information transmission is widely applied in the broadcasting field, especially for the receiving, sending and point-to-multipoint applications. Usually, FM is used to represent the frequency modulation broadcast, which generally is 76-108MHz. In China, it is 87.5-108MHz.

The transmission of communication signals between two terminals in the conventional broadcasting technology usually adopts the following mode: one terminal sends the signals, while the other terminal (or multiple terminals) receives (receive) the signals. Such mode belongs to the unidirectional audio signal transmission. A great number of problems may exist during the transmission process, such as that: when the receiving terminal suddenly enters into an area with interference, the sending terminal will automatically search for whether there are interference signals, before which the sending terminal can send a backup frequency to the receiving terminal; if there are interference signals, the sending terminal switches the frequency to be the backup frequency; while the receiving terminal judges whether to switch to the previously-appointed backup frequency according to the condition, and then performs receiving.

The terminal with the RDS function and the FM function has the data transmission function. Thus the sending terminal and the receiving terminal which have the RDS function can implement communication by using the RDS function.

When implementing communication by using the RDS function in the conventional art, as described for instance in US 2009/239557 A1 and in US 2004/203 406 A1, only when a problem occurs in the connection establishment, the RDS function is used to send the backup frequency to the receiving terminal. But, the RDS function is not used to complete the short message interaction between two terminals with the FM function.

### Summary of the Invention

In view of this, the main purpose of the disclosure is to provide a method, a terminal and a system for implementing short message interaction by using an RDS, which can complete the data information transmission, except the audio signal transmission, of the two terminals in a certain distance range by using the RDS function, without occupying the conventional radio high-frequency band.

In order to solve the technical problem, the technical solution of the disclosure is implemented below.

A method for implementing short message interaction by using an RDS comprises steps of: a source terminal receiving input information of a user, generating a first RDS data packet with authentication information and the input information, and sending the first RDS data packet to a target terminal; and the target terminal receiving the first RDS data packet sent from the source terminal, and analyzing the first RDS data packet through the authentication information.

Before the step of generating the first RDS data packet with the authentication information and the input information, the method further comprises steps of: when receiving the input information of the user, the source terminal generating a second RDS data packet with authentication information, and sending the second RDS data packet to the target terminal; and the target terminal analyzing the second RDS data packet through the authentication information, and sending confirmation information to the source terminal after successfully analyzing the second RDS data packet.

Before the source terminal receives the input information of the user, the method further comprises a step of: the source terminal searching for available frequencies which can be used as a sending frequency and a receiving frequency.

After the step that the target terminal receives the first RDS data packet sent from the source terminal, and analyzes the first RDS data packet through the authentication information, the method further comprises steps of: the target terminal sending receiving complete information to the source terminal; and the source terminal receiving the receiving complete information sent from the target terminal.

The second RDS data packet, or the first RDS data packet and the second RDS data packet comprises: receiving frequency information of the source terminal, and time for receiving and sending information which is negotiated between the source terminal and the target terminal.

A terminal for implementing short message interaction by using an RDS, comprising:
a first receiving module, configured to receive input information of a user;
a generation module, configured to generate a first RDS data packet with authentication information and the input information; and
a first sending module, configured to send the first RDS data packet to a target terminal.

In the above solution, the generation module is further configured to generate a second RDS data packet with authentication information, when the first receiving module receives the input information of the user;
the first sending module is further configured to send the second RDS data packet to the target terminal; and
the first receiving module is further configured to receive confirmation information sent from the target terminal.

In the above solution, the first sending module is further configured to search for available frequencies which can be used as a sending frequency and a receiving frequency; and/or,
the first receiving module is further configured to receive receiving complete information sent from the target terminal.

A terminal for implementing short message interaction by using an RDS. comprising:
a second receiving module, configured to receive a first RDS data packet sent from the source terminal with authentication information and input information; and
an analysis module, configured to analyze the first RDS data packet through the authentication information.

In the above solution, the terminal further comprises a second sending module;
the second receiving module is further configured to receive a second RDS data packet sent from the source terminal with authentication information;
the analysis module is further configured to analyze the second RDS data packet through the authentication information; and
the second sending module is configured to send confirmation information to the source terminal after successfully analyzing the second RDS data packet.

The second sending module is further configured to send the receiving complete information to the source terminal.

A system for implementing short message interaction by using an RDS, comprising a source terminal and a target terminal, wherein
the source terminal is configured to receive a input information of a user, to generate a first RDS data packet with authentication information and the input information, and to send the first RDS data packet to the target terminal; and
the target terminal is configured to receive the first RDS data packet sent from the source terminal, and to analyze the first RDS data packet through the authentication information.

In the above solution, the source terminal comprises a first receiving module, a generation module and a first sending module,
the first receiving module is configured to receive the input information of the user;
the generation module is configured to generate the first RDS data packet with the authentication information and the input information; and
the first sending module is configured to send the first RDS data packet to the target terminal.

In the above solution, the target terminal comprises a second receiving module and an analysis module,
the second receiving module is configured to receive the first RDS data packet sent from the source terminal; and
the analysis module is configured to analyze the first RDS data packet through the authentication information.

In the above solution, the target terminal further comprises: a second sending module;
the first receiving module is further configured to receive the input information of the user;
the generation module is further configured to generate a second RDS data packet with authentication information;
the first sending module is further configured to send the second RDS data packet to the target terminal;
the analysis module is further configured to analyze the second RDS data packet through the authentication information; and
the second sending module is configured to send confirmation information to the source terminal after successfully analyzing the second RDS data packet.

The first sending module is further configured to search for available frequencies which can be used as a sending frequency and a receiving frequency.
In the above solution, the second sending module is further configured to send a receiving complete information to the source terminal; and
the first receiving module is further configured to receive the receiving complete information sent from the target terminal.

In the disclosure, short message interaction between the terminals is performed by using the RDS function in a certain distance range. The solution of the disclosure is simply operated, convenient, practical, and not monotone. The solution does not occupy the conventional radio high-frequency band, and implements short message interaction in the case that the cellular communication system does not work.

### Brief Description of the Drawings

Fig. 1 shows a data format diagram of the RDS in the conventional art;
Fig. 2 shows a flow diagram of a method for implementing short message interaction by using an RDS according to an embodiment of the disclosure;
Fig. 3 shows a flow diagram of a method for implementing short message interaction by using an RDS according to another embodiment of the disclosure;
Fig. 4 shows a structure diagram of a system for implementing short message interaction by using an RDS according to an embodiment of the disclosure;
Fig. 5 shows a specific structure diagram of a source terminal in a system for implementing short message interaction by using an RDS as shown in Fig. 4; and
Fig. 6 shows a specific structure diagram of a target terminal in a system for implementing short message interaction by using an RDS as shown in Fig. 4.

### Detailed Description of the Embodiments

The disclosure is further described hereinafter with reference to the drawings in order to give detailed description of the technical solution of the disclosure.

The main solution of the disclosure is to complete the data communication function, except the audio signal transmission, between the two terminals by using the RDS function.

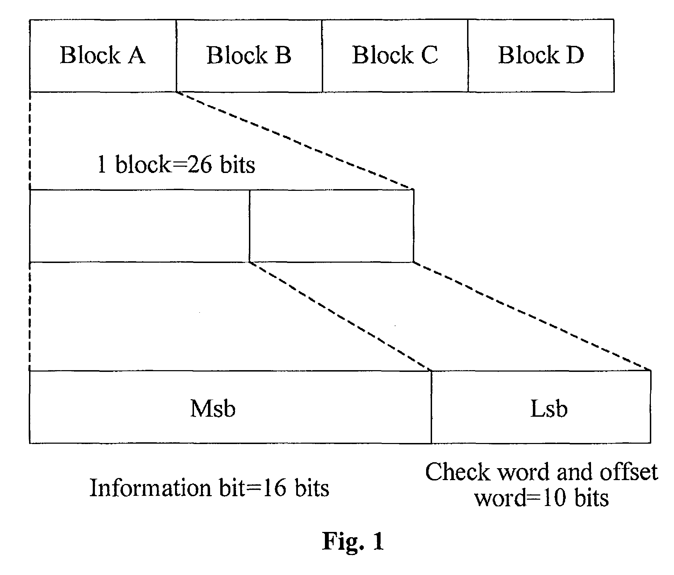

Fig. 1 shows a data format diagram of the RDS in the conventional art. As shown in Fig. 1, the RDS data format comprises in total a block A, a block B, a block C and a block D, wherein each block comprises 26 bits. The front 16 bits are information bits (Msb) which can be used for transmitting the data, and the back 10 bits are the check word and offset word (Lsb). The technical solution of the disclosure is to implement short message interaction between the two terminals by using the above 16 information bits.

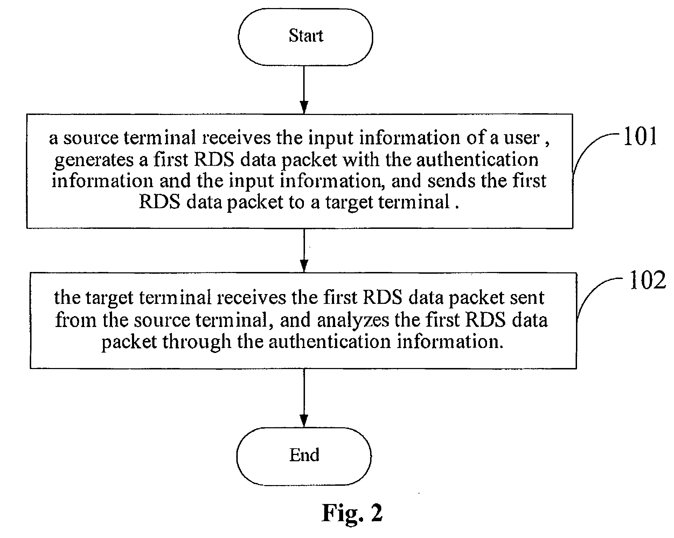

Fig. 2 shows a flow diagram of a method for implementing short message interaction by using an RDS according to an embodiment of the disclosure. As shown in Fig. 2, the embodiment of the disclosure provides a method for implementing short message interaction by using an RDS, comprising the following steps:
Step 101, a source terminal receives the input information of a user, generates a first RDS data packet with the authentication information and the input information, and sends the first RDS data packet to a target terminal; and
Step 102, the target terminal receives the first RDS data packet sent from the source terminal, and analyzes the first RDS data packet through the authentication information.

In the embodiment, during the process that the source terminal and the target terminal implement short message interaction by using the RDS function, first the source terminal searches for the currently available frequencies which have no conflict with the frequencies used in the area, and stores the found available frequencies. Two relatively distant frequencies are selected from the found available frequencies to be used as the sending frequency and the receiving frequency respectively, so as to reduce the interference.

When receiving the input information of the user, the source terminal generates the first RDS data packet with the authentication information and the input information. The input information can be content of a short message and a Subscriber Identity Module (SIM) card number of the target terminal. The authentication information can be the authentication information aiming at the SIM card number. The first RDS data packet further comprises the receiving frequency information, in order to notify the target terminal of its own receiving frequency of itself, and to make the target terminal send the follow-up information to the source terminal on the receiving frequency. The source terminal works on the sending frequency and the receiving frequency in time division mode. That is, the source terminal sends and receives information in different time periods, and the target terminal also sends and receives information in different time periods. Meanwhile, the source terminal and the target terminal need to negotiate the time for sending and receiving the information, and the negotiated time is contained in the sent RDS data packet, so as to notify the terminal when to send and/or receive the information.

The target terminal searches the frequency one by one in order to detect whether there is RDS data packet being sent. If the RDS data packet with its own authentication information (such as its own SIM card number) is found on some frequency, the searching is stopped, and the frequency is recorded as the sending frequency of the source terminal. This frequency is taken as its own receiving frequency. Meanwhile, the target terminal analyzes the first RDS data packet through the authentication information such as its own SIM card number. After successfully analyzing the data packet, the target terminal reads the receiving frequency information and the input information of the user in the first RDS data packet. Then, the target terminal takes the analyzed receiving frequency as its own sending frequency, sends the receiving complete information to the source terminal on the receiving frequency to indicate that the input information of the user sent from the source terminal has been received. After receiving the receiving complete information sent from the target terminal, the source terminal stops sending the information.

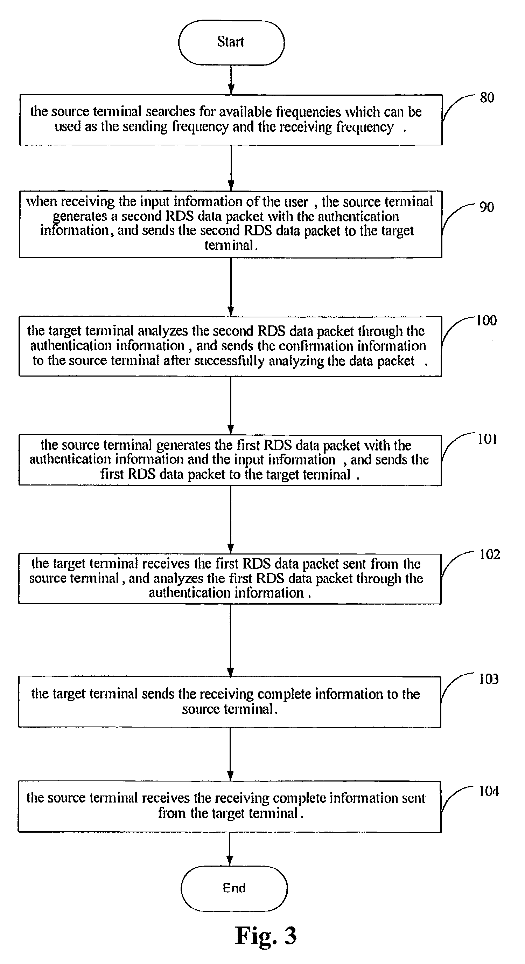

Fig. 3 shows a flow diagram of a method for implementing short message interaction by using an RDS according to another embodiment of the disclosure. As shown in Fig. 3, the embodiment of the disclosure provides a method for implementing short message interaction by using an RDS, comprising the following steps.

Step 80, the source terminal searches for the available frequencies which can be used as the sending frequency and the receiving frequency.

In the embodiment, during the process that the source terminal and the target terminal implement short message interaction by using the RDS function, first the source terminal searches for the currently available frequencies which have no conflict with the frequencies which have been used in the area. The source terminal stores the found available frequencies. Two relatively distant frequencies are selected from the searched available frequencies as the sending frequency and the receiving frequency respectively, so as to reduce the interference.

Step 90, when receiving the input information of the user, the source terminal generates a second RDS data packet with the authentication information, and sends the second RDS data packet to the target terminal.

When receiving the input information of the user, the source terminal generates the second RDS data packet with the authentication information. The input information can be the content of short message. The authentication information can be the authentication information aiming at the SIM card number of the target terminal. The second RDS data packet further comprises the receiving frequency information, in order to notify the target terminal of its own receiving frequency, that is, to make the target terminal send the follow-up information to the source terminal on the receiving frequency. The source terminal works on the sending frequency and the receiving frequency in time division mode. That is, the source terminal sends and receives information in different time periods, and the target terminal also sends and receives information in different time periods. Meanwhile, the source terminal and the target terminal need to negotiate the time for sending and receiving the information, and the negotiated time is contained in the sent second RDS data packet, so as to notify the target terminal when the source terminal sends and/or receives information.

Step 100, the target terminal analyzes the second RDS data packet through the authentication information, and sends the confirmation information to the source terminal after successfully analyzing the data packet.

The target terminal searches the frequency one by one in order to detect whether there is RDS data packet being sent. If the RDS data packet with its own authentication information (such as its own SIM card number) is found on some frequency, the searching is stopped, the frequency is recorded as the sending frequency of the source terminal, and is taken as its own receiving frequency. Meanwhile, the target terminal analyzes the received second RDS data packet through the authentication information such as its own SIM card number, and reads the receiving frequency information in the second RDS data packet after successfully analyzing the data packet. And then, the target terminal sends the confirmation information to the source terminal on the receiving frequency, indicating that the second RDS data packet sent from the source terminal has been received and reception of the information sent from the source terminal is confirmed.

Step 101, the source terminal generates the first RDS data packet with the authentication information and the input information, and sends the first RDS data packet to the target terminal.

In this step, when receiving the conformation information fed back by the target terminal, the source terminal generates the first RDS data packet with the authentication information and the input information, in order to send the first RDS data packet with the authentication information and the input information to the target terminal. The first RDS data packet comprises the receiving frequency information of the terminal and the time for sending and receiving the information which is negotiated between the terminal and the target terminal.

Step 102, the target terminal receives the first RDS data packet sent from the source terminal, and analyzes the first RDS data packet through the authentication information.

When receiving the confirmation information fed back by the target terminal, the source terminal starts to send the first RDS data packet with the authentication information and the input information to the target terminal, wherein the sending operation is continuously performed within a certain time period.

The target terminal waits to receive the information which needs to be received on the receiving frequency after sending the confirmation information. The target terminal receives the first RDS data packet sent from the source terminal with the authentication information and the input information, and analyzes the received first RDS data packet through the authentication information such as its own SIM card number. If the analysis is successful, the input information of the user can be analyzed. Otherwise, the received information is disorderly code.

The target terminal can send the receiving complete information to the source terminal after the reception is complete, indicating that the input information of the user sent from the source terminal with the authentication information has been received. The receiving function on this frequency is closed if the follow-up information sent from the source terminal cannot be received by the target terminal.

Step 103, the target terminal sends the receiving complete information to the source terminal.

Step 104, the source terminal receives the receiving complete information sent from the target terminal.

The source terminal can stop the sending operation after receiving the receiving complete information sent from the target terminal.

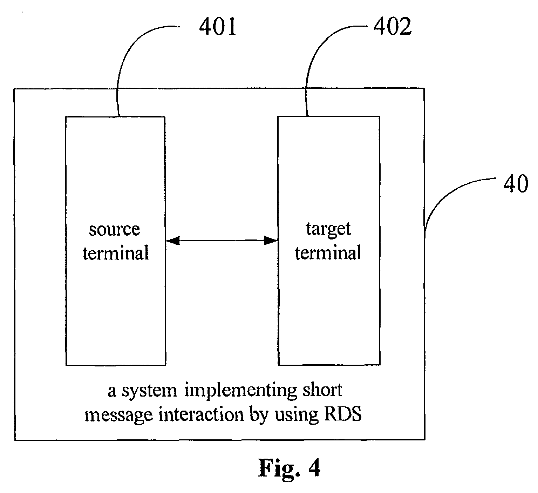

Fig. 4 shows a structure diagram of a system for implementing short message interaction by using an RDS according to an embodiment of the disclosure. As shown in Fig. 4, the embodiment of the disclosure provides a system 40 for implementing short message interaction by using an RDS, comprising a source terminal 401 and a target terminal 402, wherein
the source terminal 401 is configured to receive the input information of the user, to generate a first RDS data packet with the authentication information and the input information, and to send the first RDS data packet to the target terminal 402; and
the target terminal 402 is configured to receive the first RDS data packet sent from the source terminal, and to analyze the first RDS data packet through the authentication information.

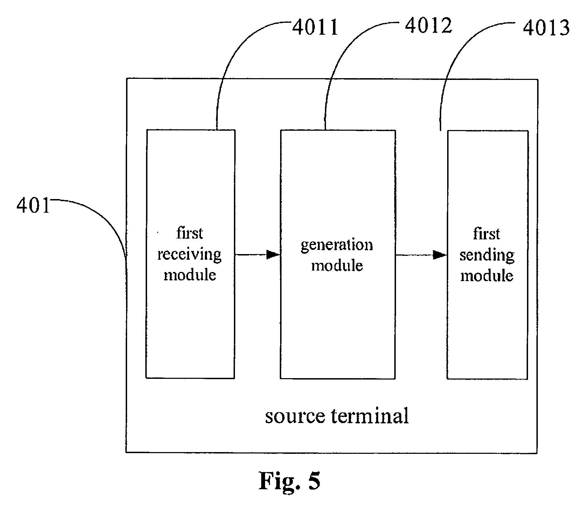

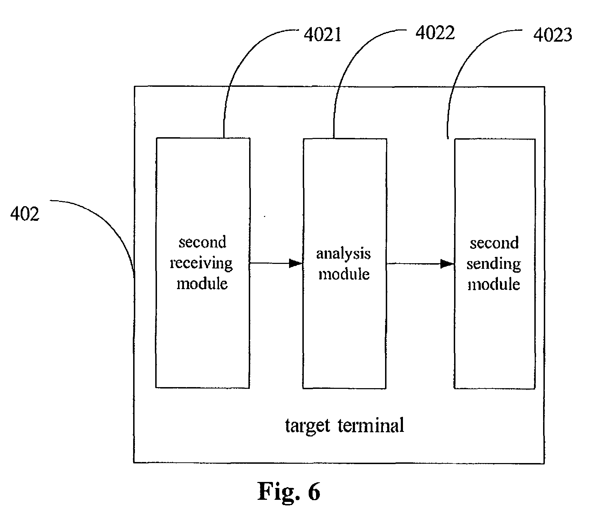

Fig. 5 and Fig. 6 are reference of the specific structures and functions of the source terminal 401 and the target terminal 402.

Fig. 5 shows a specific structure diagram of the source terminal 401 shown in Fig. 4. As shown in Fig. 5, the source terminal 401, which can implement short message interaction by using the RDS, comprises:
a first receiving module 4011, configured to receive the input information of the user;
a generation module 4012, configured to generate a first RDS data packet with the authentication information and the input information; and
a first sending module 4013, configured to send the first RDS data packet to the target terminal 402.

In the above, the generation module 4012 is further configured to generate the second RDS data packet with the authentication information when the first receiving module 4011 receives the input information of the user;
the first sending module 4013 is further configured to send the second RDS data packet to the target terminal 402, wherein the second RDS data packet further comprises the negotiated time and the receiving frequency information of the source terminal 401; and
the first receiving module 4011 is further configured to receive the confirmation information sent from the target terminal 402.

Further, the first sending module 4013 is further configured to search for the available frequencies which can be used as the sending frequency and the receiving frequency. The first receiving module 4011 is further configured to receive the receiving complete information sent from the target terminal 402.

Fig. 6 shows a specific structure diagram of the target terminal 402 shown in Fig. 4. As shown in Fig. 6, the target terminal 402 can implement short message interaction by using the RDS. That is, the target terminal 402 is the terminal which uses the RDS to implement interaction. The target terminal 402 comprises:
a second receiving module 4021, configured to receive the first RDS data packet with the authentication information and the input information sent from the first sending module 4011 of the source terminal 401; and
an analysis module 4022, configured to analyze the first RDS data packet through the authentication information.

In the above, the second receiving module 4021 is further configured to receive the second RDS data packet sent from the first sending module 4011 of the source terminal 401 with the authentication information; and the analysis module 4022 is further configured to analyze the second RDS data packet through the authentication information.

Further, the target terminal 402 further comprises: a second sending module 4023, configured to send the confirmation information to the source terminal 401 after successfully analyzing the second RDS data packet. The second sending module 4023 is further configured to send the receiving complete information to the source terminal 401.

In this embodiment, during the process that the source terminal 401 and the target terminal 402 implement simple short message interaction by using the RDS function, first the first sending module 4013 searches for the current available frequencies which have no conflict with the frequency used in the regional space, and stores the found available frequencies. Then, two relatively-distant frequencies are selected from the found available frequencies as the sending frequency and the receiving frequency respectively, so as to reduce the interference.

When the first receiving module 4011 receives the input information (such as the content of short message) of the user, the generation module 4012 generates the second RDS data packet with the authentication information. The authentication information can be the authentication information aiming at the SIM card number of the target terminal. The second RDS data packet further comprises the receiving frequency information, in order to notify the target terminal 402 of its own receiving frequency, that is, to make the target terminal 402 send the follow-up information to the source terminal 401 on this receiving frequency. The source terminal 401 works on the sending frequency and the receiving frequency in time division mode. That is, the source terminal 401 sends and receives the information in different time periods, and the target terminal 402 also sends and receives the information in different time periods. Meanwhile, the source terminal 401 and the target terminal 402 need to negotiate the time for sending and receiving the information, and the negotiated time is contained in the sent second RDS data packet, so as to notify the target terminal 402 when the information is sent and/ or received.

The target terminal 402 searches for the frequency one by one in order to detect whether there is RDS data packet being sent. If the RDS data packet with its own authentication information (such as its own SIM card number) is found on some frequency, the searching is stopped, the frequency is recorded as the sending frequency of the source terminal 401, and is taken as its own receiving frequency. Meanwhile, the analysis module 4022 of the target terminal 402 analyzes the received second RDS data packet through the authentication information such as its own SIM card number, and reads the receiving frequency information in the second RDS data packet after successfully analyzing the data packet. And then, the second sending module 4023 of the target terminal 402 sends the confirmation information to the source terminal 401 on the receiving frequency, indicating that the second RDS data packet sent from the source terminal 401 has been received and reception of the information sent from the source terminal 401 is confirmed.

When the first receiving module 4011 of the source terminal 401 receives the confirmation information fed back by the target terminal 402, the generation module 4012 generates the first RDS data packet with the authentication information and the input information, in order to make the first sending module 4013 send the first RDS data packet with the authentication information and the input information to the target terminal 402. The first RDS data packet can comprise the receiving frequency information of the source terminal 401 and the time for sending and receiving the information negotiated between the source terminal 401 and the target terminal 402.

When the first receiving module 4011 of the source terminal 401 receives the confirmation information fed back by the target terminal 402, the first sending module 4013 starts to send the first RDS data packet with the authentication information and the input information to the target terminal 402. The sending operation of the first sending module 4013 is continuously performed within a certain time period.

The target terminal 402 waits to receive the information which needs to be received on the receiving frequency after completely sending the confirmation information. The second receiving module 4021 of the target terminal 402 receives the first RDS data packet with the authentication information and the input information sent from the first sending module 4013 of the source terminal 401, and analyzes the received first RDS data packet through the authentication information (such as the SIM card number of the target terminal 402). If the analysis is successful, the input information of the user can be analyzed. Otherwise, the received information is disorderly code.

The target terminal 402 can send the receiving complete information to the source terminal 401 after the reception is completed, indicating that the input information (such as the content of short message) of the user sent from the source terminal 401 with the authentication information has been received. The receiving function on this frequency is closed if the follow-up information sent from the source terminal 401 cannot be received by the target terminal 402.

The sending operation can be stopped after the first receiving module 4011 of the source terminal 401 receives the receiving complete information sent from the target terminal 402.

The process that the source terminal 401 and the target terminal 402 implement short message interaction by using the RDS function is described below in detail.

The source terminal 401, such as the mobile phone, starts the FM function, performs frequency search according to a certain step, such as the 100KHZ step, records the information of unused frequency, and selects two frequencies as the sending frequency and the receiving frequency respectively. For example: if it found through scanning that 86MHz, 93MHz, 95MHz, 97MHz and 100MHz are being used. Then, 88MHz can be selected as the sending frequency, and 105MHz can be selected as the receiving frequency.

When the user inputs the content of short message and the short message number 1122, the source terminal 401 adopts 88MHz to send the second RDS data packet. The second RDS data packet comprises the short message number 1122 and the information of 105MHz. The short message number 1122 is taken as the authentication information, and 105MHz is taken as the receiving frequency information. The second RDS data packet further comprises the time for sending and receiving the information negotiated between the source terminal 401 and the target terminal 402. The source terminal 401 performs the sending and receiving process in time division mode, so as to complete the sending and receiving operations.

The target terminal 402 is the terminal of the short message number 1122, such as the mobile phone. The target terminal 402 makes sure that the FM function has been started, searches the frequencies one by one according to the 100KHz step, and receives the second RDS data packet on the sending frequency of the source terminal 401. If the second RDS data packet comprises its own short message number 1122, the frequency which is 88MHz is recorded. Meanwhile, the receiving frequency information 105MHz sent from the source terminal 401 also can be acquired from the second RDS data packet. At this point, the target terminal 402 stops searching the frequencies, and sends the confirmation information to the source terminal 401 on the 88MHz frequency. The target terminal 402 analyzes the time for sending and receiving the information contained in the second RDS data packet, and performs the sending and receiving operations in the time division mode according to the time.

The source terminal 401 receives the confirmation information of the target terminal 402 on the 105MHz frequency, and stops sending the second RDS data packet. At this point, the source terminal 401 starts to send the first RDS data packet, which takes the short message number 1122 as the authentication information and contains the information that needs to be sent by the user, namely, the content of short message input by the user.

The target terminal 402 waits to receive the information which needs to be received on the 88MHz frequency after sending the confirmation information. The target terminal 402 receives the first RDS data packet sent from the source terminal 401 with the authentication information of short message number 1122, and analyzes the first RDS data packet through the authentication information of short message number 1122. It the analysis is successful, the received information can be successfully analyzed. Otherwise, the received information is disorderly code.

The target terminal 402 sends the receiving complete information to the source terminal 401 after the reception is completed. The source terminal 401 stops working after receiving the receiving complete information. The FM function is closed if the target terminal 402 cannot receive the information sent from the source terminal 401 on the frequency 88MHz within a certain time period.

During the process of implementing short message interaction by the two terminals, both the source terminal 401 and the target terminal 402 send the information continuously. The sending process is limited by time.

During the whole short message interaction process, the normal receiving process can be affected if the sending frequency and the receiving frequency are interfered temporarily. But the complete receiving and sending process can be guaranteed by using the continuous and repeated transmission. If the sending and receiving process is interfered for a long time, the whole short message interaction process fails because of timeout. At this point, the source terminal 401 re-searches for the available frequencies, and starts to resend the information according to the above process, in order to prevent the interference signals.

RDS is an expansion of the standard FM radio transmission, the disclosure reprograms the corresponding coding information in the RDS to generate the RDS data packet, so as to complete the normal communication between two terminals. Furthermore, the compatibility with the broadcast of normal RDS is guaranteed, thus avoiding that the normal FM broadcast signals cannot be listened.

If the target terminal 402 needs to transmit information to the source terminal 401, it needs to be negotiated when the target 402 and the source terminal 401 are switched to the sending state and the receiving state to guarantee that the information sent from the target terminal 402 is received by the source terminal 401. Such negotiation can be that the source terminal 401 in the sending state notifies the target terminal when the source terminal 401 will switch to the receiving state. The target terminal 402 sends the information according to the negotiated time when it is needed to send the information to the source terminal 401.

The two terminals are automatically tuned when initiate the short message interaction process. The target terminal 402 and the source terminal 401 can exchange roles after the sending and receiving operations are normally implemented.

The embodiment of the disclosure implements short message interaction between the terminals by using the RDS function within a certain distance range. The solution is simply operated, convenient, practical, and not .monotone. This solution does not occupy the conventional radio high-frequency band, and implements short message interaction in the case that the cellular communication system does not work.

The above is only the preferred embodiments of the disclosure and not intended to limit disclosure. Any equivalent structure or process change implemented based on the descriptions and drawings of the disclosure, or the directly or indirectly application of the disclosure in other related technical fields shall fall within the scope of protection of the disclosure.

## Claims

1. A method for implementing short message interaction by using a Radio Data System RDS, **characterized in that** the method comprises steps of:
a source terminal receiving input information of a user, generating a first RDS data packet with authentication information and the input information, and sending the first RDS data packet to a target terminal (101) and
the target terminal receiving the first RDS data packet sent from the source terminal, and analyzing the first RDS data packet through the authentication information (102);
wherein before the step of generating the first RDS data packet with the authentication information and the input information, the method further comprises steps of: when receiving the input information of the user, the source terminal generating a second RDS data packet with authentication information, and sending the second RDS data packet to the target terminal (90) and the target terminal analyzing the second RDS data packet through the authentication information, and sending confirmation information to the source terminal after successfully analyzing the second RDS data packet (100).

2. The method according to claim 1, **characterized in that**
before the step that the source terminal receives the input information of the user, the method further comprises a step of: the source terminal searching for available frequencies which can be used as a sending frequency and a receiving frequency.

3. The method according to claim 1 or 2, **characterized in that** after the step that the target terminal receives the first RDS data packet sent from the source terminals, and analyzes the first RDS data packet through the authentication information, the method further comprises steps of:
the target terminal sending receiving complete information to the source terminal; and
the source terminal receiving the receiving complete information sent from the target terminal.

4. The method according to claim 1, **characterized in that** the second RDS data packet, or the first RDS data packet and the second RDS data packet comprises: receiving frequency information of the source terminal, and time for receiving and sending information which is negotiated between the source terminal and the target terminal.

5. A source terminal for implementing short message interaction by using a Radio Data System RDS, **characterized by** comprising:
a first receiving module (4011) configured to receive input information of a user;
a generation module (4012) configured to generate a first RDS data packet with authentication information and the input information; and
a first sending module (4013) configured to send the first RDS data packet to a target terminal;
wherein the generation module is further configured to generate a second RDS data packet with authentication information, when the first receiving module receives the input information of the user; the first sending module is further configured to send the second RDS data packet to the target terminal; and the first receiving module is further configured to receive confirmation information sent from the target terminal.

6. The terminal according to claim 5, **characterized in that**
the first sending module is further configured to search for available frequencies which can be used as a sending frequency and a receiving frequency; and/or,
the first receiving module is further configured to receive receiving complete information sent from the target terminal.

7. A target for implementing short message interaction by using a Radio Data System RDS, **characterized by** comprising:
a second receiving module (4021) configured to receive a first RDS data packet sent from the source terminal with authentication information and input information; and
an analysis module (4022) configured to analyze the first RDS data packet through the authentication information;
wherein the terminal further comprises a second sending module (4023) the second receiving module is further configured to receive a second RDS data packet sent from the source terminal with authentication information; the analysis module is further configured to analyze the second RDS data packet through the authentication information; and the second sending module is configured to send confirmation information to the source terminal after successfully analyzing the second RDS data packet.

8. The terminal according to claim 7, **characterized in that** the second sending module is further configured to send receiving complete information to the source terminal.

9. A system for implementing short message interaction by using a Radio Data System RDS, comprising a source terminal (401) and a target terminal (402) **characterized in that**
the source terminal is configured to receive input information of a user, to generate a first RDS data packet with authentication information and the input information, and to send the first RDS data packet to the target terminal; and
the target terminal is configured to receive the first RDS data packet sent from the source terminal, and to analyze the first RDS data packet through the authentication information;
wherein the target terminal comprises a second receiving module (4021) and an analysis module (4022) the second receiving module is configured to receive the first RDS data packet sent from the source terminal; and the analysis module is configured to analyze the first RDS data packet through the authentication information;
the target terminal further comprises: a second sending module (4023) the first receiving module is further configured to receive the input information of the user; the generation module is further configured to generate a second RDS data packet with authentication information; the first sending module is further configured to send the second RDS data packet to the target terminal; the analysis module is further configured to analyze the second RDS data packet through the authentication information; and the second sending module is configured to send confirmation information to the source terminal after successfully analyzing the second RDS data packet.

10. The system according to claim 9, **characterized in that** the source terminal comprises a first receiving module (4011) a generation module (4012) and a first sending module,
the first receiving module is configured to receive the input information of the user (4013)
the generation module is configured to generate the first RDS data packet with the authentication information and the input information; and
the first sending module is configured to send the first RDS data packet to the target terminal.

11. The system according to claim 9, **characterized in that**
the first sending module is further configured to search for available frequencies which can be used as a sending frequency and a receiving frequency.

12. The system according to claim 11, **characterized in that**
the second sending module is further configured to send a receiving complete information to the source terminal; and
the first receiving module is further configured to receive the receiving complete information sent from the target terminal.

## Patentansprüche

1. Ein Verfahren zur Implementierung von Kurznachrichteninteraktion mit einem Funkdatensystem (Radio Data System, RDS), **dadurch gekennzeichnet, dass** das Verfahren folgende Schritte umfasst:
indem ein Quellterminal Eingabeinformationen eines Nutzers empfängt, ein erstes RDS-Datenpaket mit Authentifizierungsinformationen und den Eingabeinformationen erzeugt, und das erste RDS-Datenpaket an ein Zielterminal (101) sendet, und
indem das Zielterminal das erste RDS-Datenpaket, das vom Quellterminal gesendet wurde, empfängt und das erste RDS-Datenpaket über die Authentifizierungsinformationen (102) analysiert; und
wobei vor dem Schritt des Erzeugens des ersten RDS-Datenpakets mit der Authentifizierungsinformation und den Eingabeinformation, das Verfahren weiter folgende Schritte umfasst: wenn die Eingabeinformation des Benutzers empfangen wird, Erzeugen eines zweiten RDS Datenpakets mit Authentifizierungsinformation durch das Quellterminal, und Senden des zweiten RDS-Datenpakets an das Zielterminal (90) und Analysieren des zweiten RDS-Datenpakets durch das Zielterminal anhand der Authentifizierungsinformationen und Senden von Bestätigungsinformationen an das Quellterminal nach einem erfolgreichen Analysieren des zweiten RDS-Datenpakets (100).

2. Das Verfahren gemäß Anspruch 1, **dadurch gekennzeichnet, dass**
das Verfahren vor dem Schritt des Empfangens der Eingabeinformationen des Nutzers durch das Quellterminal weiter folgenden Schritt umfasst: Suchen verfügbarer Frequenzen, die als Sendefrequenz und Empfangsfrequenz genutzt werden können, durch das Quellterminal.

3. Das Verfahren gemäß Anspruch 1 oder 2, **dadurch gekennzeichnet, dass** das Verfahren nach dem Schritt, in dem das Zielterminal das erste RDS-Datenpaket empfängt, das vom Quellterminal gesendet wurde, und das erste RDS-Datenpaket durch die Authentifizierungsinformationen analysiert, weiter folgende Schritte umfasst:
Senden von Empfang-vollständig Information durch das Zielterminal an das Quellterminal; und
Empfangen der Empfang-vollständig Informationen, die vom Zielterminal gesendet wurden, durch das Quellterminal.

4. Das Verfahren gemäß Anspruch 1, **dadurch gekennzeichnet, dass** das zweite RDS-Datenpaket, oder das erste RDS-Datenpaket und das zweite RDS-Datenpaket, Folgendes umfassen: Empfangen von Frequenzinformationen des Quellterminals und einer Zeit zum Empfangen und Senden von Informationen, die zwischen dem Quellterminal und dem Zielterminal ausgehandelt werden.

5. Ein Quellterminal zur Implementierung von Kurznachrichteninteraktion mit einem Funkdatensystem (RDS), **dadurch gekennzeichnet, dass** es Folgendes umfasst:
ein erstes Empfangsmodul (4011), das ausgebildet ist, um Eingabeinformationen eines Nutzers zu empfangen,
ein Generatormodul (4012), das ausgebildet ist, um ein erstes RDS-Datenpaket mit Authentifizierungsinformationen und den Eingabeinformationen zu erzeugen, und
ein erstes Sendemodul (4013), das ausgebildet ist, um das erste RDS-Datenpaket an ein Zielterminal zu senden,
wobei das Erzeugungsmodul weiter ausgebildet ist, um ein zweites RDS-Datenpaket mit Authentifizierungsinformationen zu erzeugen, wenn das erste Empfangsmodul die Eingabeinformationen des Nutzers empfängt; wobei das erste Sendemodul weiter ausgebildet ist, um das zweite RDS-Datenpaket an das Zielterminal zu senden, und wobei das erste Empfangsmodul weiter ausgebildet ist, um Bestätigungsinformationen zu empfangen, die vom Zielterminal gesendet werden.

6. Das Terminal gemäß Anspruch 5, **dadurch gekennzeichnet, dass**
das erste Sendemodul weiter ausgebildet ist, um nach verfügbaren Frequenzen zu suchen, die als Sendefrequenz und als Empfangsfrequenz verwendet werden können, und/oder
das erste Empfangsmodul weiter ausgebildet ist, um Empfang-vollständig Informationen zu empfangen, die vom Zielterminal gesendet werden.

7. Ein Zielterminal zur Implementierung von Kurznachrichteninteraktion mit einem Funkdatensystem RDS, **dadurch gekennzeichnet, dass** es Folgendes umfasst:
ein zweites Empfangsmodul (4021), ausgebildet, um ein erstes RDS-Datenpaket zu empfangen, das vom Quellterminal mit Authentifizierungsinformationen und Eingabeinformationen gesendet wurde, und
ein Analysemodul (4022), das ausgebildet ist, um das erste RDS-Datenpaket durch die Authentifizierungsinformationen zu analysieren,
wobei das Terminal weiter ein zweites Sendemodul (4023) umfasst, wobei das zweite Empfangsmodul weiter ausgebildet ist, um ein zweites RDS-Datenpaket zu empfangen, das mit Authentifizierungsinformationen vom Quellterminal gesendet wurde; wobei das Analysemodul weiter ausgebildet ist, um das zweite RDS-Datenpaket durch die Authentifizierungsinformationen zu analysieren; und wobei das zweite Sendemodul ausgebildet ist, um nach der erfolgreichen Analyse des zweiten RDS-Datenpakets Bestätigungsinformationen an das Quellterminal zu senden.

8. Das Terminal gemäß Anspruch 7, **dadurch gekennzeichnet, dass** das zweite Sendemodul weiter ausgebildet ist, um Empfang-vollständig Informationen an das Quellterminal zu senden.

9. Ein System zur Implementierung von Kurznachrichteninteraktion mit einem Funkdatensystem RDS, das ein Quellterminal (401) und ein Zielterminal (402) umfasst, **dadurch gekennzeichnet, dass**
das Quellterminal ausgebildet ist, um Eingabeinformationen eines Nutzers zu empfangen, ein erstes RDS-Datenpaket mit Authentifizierungsinformationen und den Eingabeinformationen zu erzeugen und das erste RDS-Datenpaket an das Zielterminal zu senden, und
das Zielterminal ausgebildet ist, um das erste RDS-Datenpaket zu empfangen, das vom Quellterminal versandt wurde, und das erste RDS-Datenpaket durch die Authentifizierungsinformationen zu analysieren,
wobei das Zielterminal ein zweites Empfangsmodul (4021) und ein Analysemodul (4022) umfasst, wobei das zweite Empfangsmodul ist ausgebildet, um das erste RDS-Datenpaket zu empfangen, das vom Quellterminal gesendet wurde; und wobei das Analysemodul ausgebildet ist, um das erste RDS-Datenpaket durch die Authentifizierungsinformationen zu analysieren,
das Zielterminal weiter Folgendes umfasst: ein zweites Sendemodul (4023); wobei das erste Empfangsmodul weiter ausgebildet ist, um die Eingabeinformationen des Nutzers zu empfangen; wobwi das Erzeugungsmodul weiter ausgebildet ist, um ein zweites RDS-Datenpaket mit Authentifizierungsinformationen zu erzeugen; wobei das erste Sendemodul weiter ausgebildet ist, um das zweite RDS-Datenpaket an das Zielterminal zu senden; wobei das Analysemodul weiter ausgebildet ist, um das zweite RDS-Datenpaket durch die Authentifizierungsinformationen zu analysieren, und das zweite Sendemodul ausgebildet ist, um Bestätigungsinformationen nach erfolgreicher Analyse des zweiten RDS-Datenpakets an das Quellterminal zu senden.

10. Das System gemäß Anspruch 9, **dadurch gekennzeichnet, dass** das Quellterminal ein erstes Empfangsmodul (4011), ein Erzeugungsmodul (4012) und ein erstes Sendemodul umfasst,
das erste Empfangsmodul ausgebildet ist, um die Eingabeinformationen des Nutzers (4013) zu empfangen,
das Erzeugungsmodul ausgebildet ist, um das erste RDS-Datenpaket mit den Authentifizierungsinformationen und den Eingabeinformationen zu erzeugen, und
das erste Sendemodul ausgebildet ist, um das erste RDS-Datenpaket an das Zielterminal zu senden.

11. Das System gemäß Anspruch 9, **dadurch gekennzeichnet, dass**
das erste Sendemodul weiter ausgebildet ist, um verfügbare Frequenzen zu suchen, die als Sendefrequenz und als Empfangsfrequenz verwendet werden können.

12. Das System gemäß Anspruch 11, **dadurch gekennzeichnet, dass**
das zweite Sendemodul weiter ausgebildet ist, um eine Empfang-vollständig Information an das Quellterminal zu senden, und
das erste Empfangsmodul weiter ausgebildet ist, um die Empfang- vollständig Information, die vom Zielterminal gesendet wurde, zu empfangen.

## Revendications

1. Procédé de mise en oeuvre d'interaction de message court en utilisant un système de données radio RDS, **caractérisé en ce que** le procédé comprend les étapes consistant en:
la réception par un terminal source d'informations d'entrée d'un utilisateur, la génération d'un premier paquet de données RDS avec des informations d'authentification et les informations d'entrée, et l'envoi du premier paquet de données RDS à un terminal cible (101); et
la réception par le terminal cible du premier paquet de données RDS envoyé depuis le terminal source, et l'analyse du premier paquet de données RDS à travers les informations d'authentification (102) ;
dans lequel avant l'étape de génération du premier paquet de données RDS avec les informations d'authentification et les informations d'entrée, le procédé comprend en outre l'étape consistant en : lors de la réception des informations d'entrée de l'utilisateur, la génération par le terminal source d'un deuxième paquet de données RDS avec les informations d'authentification, et l'envoi du deuxième paquet de données RDS vers le terminal cible (90) et l'analyse par le terminal cible du deuxième paquet de données RDS à travers les informations d'authentification, et l'envoi d'informations de confirmation au terminal source après avoir analysé avec succès le deuxième paquet de données RDS (100).

2. Procédé selon la revendication 1, **caractérisé en ce qu'**avant l'étape durant laquelle le terminal source reçoit les informations d'entrée de l'utilisateur, le procédé comprend en outre une étape consistant en: la recherche par le terminal source de fréquences disponibles qui peuvent être utilisées comme fréquence d'envoi et fréquence de réception.

3. Procédé selon la revendication 1 ou 2, **caractérisé en ce qu'**après l'étape durant laquelle le terminal cible reçoit le premier paquet de données RDS envoyé depuis le terminal source et analyse le premier paquet de données RDS à travers les informations d'authentification, le procédé comprend en outre les étapes consistant en:
l'envoi par le terminal cible des informations complètes de réception au terminal source; et
la réception par le terminal source des informations complètes de réception envoyées depuis le terminal cible.

4. Procédé selon la revendication 1, **caractérisé en ce que** le deuxième paquet de données RDS, ou le premier paquet de données RDS et le deuxième paquet de données RDS comprend: la réception d'informations de fréquence du terminal source, et le temps pour la réception et l'envoi d'informations qui est négocié entre le terminal source et le terminal cible.

5. Terminal source pour la mise en oeuvre d'interaction de message court en utilisant un système de données radio RDS, **caractérisé en ce qu'**il comprend :
un premier module de réception (4011), configuré pour recevoir des informations d'entrée d'un utilisateur;
un module de génération (4012), configuré pour générer un premier paquet de données RDS avec les informations d'authentification et les informations d'entrée; et
un premier module d'envoi (4013), configuré pour envoyer le premier paquet de données RDS à un terminal cible ;
dans lequel le module de génération est en outre configuré pour générer un deuxième paquet de données RDS avec des informations d'authentification, lorsque le premier module de réception reçoit les informations d'entrée de l'utilisateur ; le premier module d'envoi est en outre configuré pour envoyer le deuxième paquet de données RDS au terminal cible ; et le premier module de réception est en outre configuré pour recevoir les informations de confirmation envoyées depuis le terminal cible.

6. Terminal selon la revendication 5, **caractérisé en ce que**
le premier module d'envoi est en outre configuré pour rechercher des fréquences disponibles qui peuvent être utilisées en tant que fréquence d'envoi et fréquence de réception; et/ou,
le premier module de réception est en outre configuré pour recevoir des informations complètes de réception envoyées depuis le terminal cible.

7. Terminal cible pour la mise en oeuvre d'interaction de message court en utilisant un système de données radio RDS, **caractérisé en ce qu'**il comprend :
un deuxième module de réception (4021), configuré pour recevoir un premier paquet de données RDS envoyé depuis le terminal source avec les informations d'authentification et les informations d'entrée; et
un module d'analyse (4022) configuré pour analyser le premier paquet de données RDS à travers les informations d'authentification ;
dans lequel le terminal comprend en outre un deuxième module d'envoi (4023), le deuxième module de réception est en outre configuré pour recevoir un deuxième paquet de données RDS envoyé depuis le terminal source avec les informations d'authentification; le module d'analyse est en outre configuré pour analyser le deuxième paquet de données RDS à travers les informations d'authentification; et le deuxième module d'envoi est configuré pour envoyer des informations de confirmation au terminal source après avoir analysé avec succès le deuxième paquet de données RDS.

8. Terminal selon la revendication 7, **caractérisé en ce que** le deuxième module d'envoi est en outre configuré pour envoyer des informations complètes de réception au terminal de source.

9. Système pour la mise en oeuvre d'interaction de message court en utilisant un système de données radio RDS, comprenant un terminal source (401) et un terminal cible (402), **caractérisé en ce que**
le terminal source est configuré pour recevoir des informations d'entrée d'un utilisateur, pour générer un premier paquet de données RDS avec les informations d'authentification et les informations d'entrée, et pour envoyer le premier paquet de données RDS au terminal cible; et
le terminal cible est configuré pour recevoir le premier paquet de données RDS envoyé depuis le terminal source, et pour analyser le premier paquet de données RDS à travers les informations d'authentification ;
dans lequel le terminal cible comprend un deuxième module de réception (4021), et un module d'analyse (4022), le deuxième module de réception est configuré pour recevoir le premier paquet de données RDS envoyé depuis le terminal source; et le module d'analyse est configuré pour analyser le premier paquet de données RDS à travers les informations d'authentification ;
le terminal cible comprend en outre : un deuxième module d'envoi (4023), le premier module de réception est en outre configuré pour recevoir les informations d'entrée de l'utilisateur ; le module de génération est en outre configuré pour générer un deuxième paquet de données RDS avec les informations d'authentification; le premier module d'envoi est en outre configuré pour envoyer le deuxième paquet de données RDS au terminal cible : le module d'analyse est en outre configuré pour analyser le deuxième paquet de données RDS à travers les informations d'authentification; et le deuxième module d'envoi est configuré pour envoyer des informations de confirmation au terminal source après avoir analysé avec succès le deuxième paquet de données RDS.

10. Système selon la revendication 9, **caractérisé en ce que** le terminal source comprend un premier module de réception (4011), un module de génération (4012) et un premier module d'envoi,
le premier module de réception est configuré pour recevoir les informations d'entrée de l'utilisateur (4013),
le module de génération est configuré pour générer le premier paquet de données RDS avec les informations d'authentification et les informations d'entrée ; et
le premier module d'envoi est configuré pour envoyer le premier paquet de données RDS au terminal cible.

11. Système selon la revendication 9, **caractérisé en ce que**
le premier module d'envoi est en outre configuré pour rechercher des fréquences disponibles qui peuvent être utilisées comme fréquence d'envoi et fréquence de réception.

12. Système selon la revendication 11, **caractérisé en ce que**
le deuxième module d'envoi est en outre configuré pour envoyer des informations complètes de réception au terminal source ; et
le premier module de réception est en outre configuré pour recevoir les informations complètes de réception envoyées depuis le terminal cible.
